# FASCICULE DE BREVET EUROPEEN

(11) **EP 1 437 753 B1**
(45) Date de publication et mention de la délivrance du brevet: **08.06.2005**
(21) Numéro de dépôt: 03016394.3
(22) Date de dépôt: 21.07.2003
(51) Int. Cl.: H01H 25/04, H01H 9/18, B60K 37/06

(54) **Dispositif de commande de fonctions muni d'un sélecteur et planche de bord de véhicule automobile équipée d'un tel dispositif**
Vorrichtung zm Auswählen und Bestätigen einer Funktion und mit dieser versehenes Armaturenbrett
Device for selecting and commanding a function device and dashboard with such a device

(30) Priorité: 23.07.2002 FR 0209327
(43) Date de publication de la demande: 14.07.2004
(73) Titulaire: VALEO CLIMATISATION, 78321 La Verrière (FR)
(72) Inventeur: Lacroix, Louis, 94500 Champigny Sur Marne (FR); Toussaint, Alain, 78310 Coignières (FR)

(56) Documents cités:
- EP-A- 0 274 670
- FR-A- 2 808 109

## Description

L'invention se rapporte à un dispositif commande de fonctions muni d'un sélecteur, en particulier pour une planche de bord de véhicule automobile.

Les véhicules automobiles actuels sont équipés d'un certain nombre de fonctions de confort et de distraction tels que :
- autoradio, climatisation, téléphone, service télématique (information sur le trafic, météo...), navigation par satellite, accès internet, DVD, etc...

En général, ces fonctions sont proposées sous la forme d'une série de boîtiers avec leur propre interface de commande, qui sont le plus souvent implantés en console centrale sur la planche de bord.

Du point de vue de l'ergonomie d'utilisation, cette solution permet de bien délimiter les fonctions en les regroupant par zones. Malheureusement, la multiplication des nouvelles fonctions et l'espace limité imposent une limite à ce genre de solution. Par ailleurs, la multiplication des touches rend la compréhension difficile, surtout pour le conducteur. Il est souhaitable que l'encombrement en surface des organes de commande soit le plus réduit possible sur la planche de bord, en particulier en console centrale.

Une solution possible consiste à grouper le maximum de commandes sur une même touche, avec un interface de commande multifonction qui pourrait comprendre des touches de réglage, une touche de sélection, une touche de validation, une touche d'annulation, une touche d'accès aux menus.

Cette approche permet de réduire de manière importante l'espace utilisé en console centrale, mais elle impose des concessions importantes sur l'ergonomie, la compréhension des menus et la rapidité d'accès aux informations que l'on souhaite obtenir et régler. Il est par ailleurs courant d'avoir à placer un écran proche de ces touches pour expliquer leur action en fonction du contexte.

Une solution proposée par le brevet FR 2 808 109, qui montre les caractéristiques du préambule de la revendication 1, consiste à prévoir un certain nombre de pictogrammes représentés sur un disque pouvant être déplacé en rotation par l'intermédiaire d'un bouton traversant l'orifice central d'une façade visible par l'utilisateur. En tournant le bouton solidaire du disque, l'utilisateur fait apparaître certaines fonctions déterminées par un contexte précis d'utilisation d'un appareil particulier (lecteur CD, navigation, climatisation), ces pictogrammes apparaissant alors au travers d'ouvertures pratiquées dans ladite façade. Ainsi, il est possible de sélectionner une fonction particulière à l'aide de touches à enfoncement placées en regard des ouvertures où apparaissent les pictogrammes.

Cependant, cette solution ne donne pas entièrement satisfaction, même si elle permet de réduire de manière importante l'espace utilisé. En effet, elle est peu ergonomique du fait de la commande entre le bouton central de commande et le support portant les pictogrammes, nécessitant un mouvement important du bouton pour sélectionner convenablement la fonction souhaitée. La fonctionnalité est également peu satisfaisante car le nombre de fonctions sélectionnables est limité.

Pour résoudre ces problèmes, tout au moins certains d'entre eux, l'invention propose une configuration ergonomique rotationnelle d'un dispositif de commande par combinaison de fonctions reconfigurables et de non reconfigurables.

Plus précisément, l'invention a pour objet un dispositif de commande de fonction comprenant au moins :
- un couvercle,
- un sélecteur rotatif déplaçable entre au moins deux positions de sélection par rapport au couvercle, ledit sélecteur présentant une course de déplacement en rotation,
- une pluralité d'actionneurs disposés sur le couvercle et manipulables par un utilisateur, certains au moins desdits actionneurs pilotant des fonctions différentes pour au moins deux positions différentes du sélecteur,
- des symboles mobiles en rotation par rapport au couvercle et dont le déplacement est lié à celui du sélecteur pour afficher la fonction d'au moins certains desdits actionneurs pilotant les différentes fonctions,
dans lequel les symboles mobiles sont entraînés indirectement par le sélecteur rotatif de sorte que le rapport entre la course de déplacement en rotation du sélecteur rotatif, pour le passage d'une position à une autre, et la course de déplacement en rotation correspondante des symboles mobiles, est différent de 1.

Selon des modes préférés de réalisation de l'invention :
- les symboles mobiles sont montés sur un support déplaçable en rotation entraîné par un organe de transmission, par exemple une courroie, en prise avec le sélecteur rotatif et ledit support ;
- le rapport entre la course de déplacement en rotation du sélecteur rotatif et la course de déplacement en rotation du support est avantageusement strictement inférieur à 1 et supérieur ou égale à 0,25, de préférence sensiblement égal à 0,5 ;
- la course de déplacement en rotation du sélecteur rotatif couvre ± 45° et la course de déplacement en rotation du support ± 90° ;
- le sélecteur rotatif est constitué par une molette et le support des symboles mobiles par un disque
- la molette est une molette périphérique et le disque est disposé concentriquement par rapport à ladite molette, à l'intérieur de celle-ci ;
- la courroie d'entraînement présente une section sensiblement circulaire avec une partie renflée et élargie d'un côté et une partie ouverte diamétralement opposée à la partie renflée ;
- la partie renflée de la courroie d'entraînement présente un ergot saillant en prise avec le sélecteur rotatif et la partie ouverte de la courroie d'entraînement présente deux ergots saillant en prise avec le support des symboles mobiles ;

En particulier, le dispositif de l'invention peut plus spécifiquement comprendre :
- quatre symboles fixes disposés sur le couvercle,
- quatre symboles mobiles disposés sous le couvercle et visibles au travers de celui-ci par l'intermédiaire d'ouvertures aménagées au travers dudit couvercle, et
- huit actionneurs à enfoncement disposés sur le couvercle et en regard d'un symbole fixe ou mobile.

Avantageusement, une source lumineuse est reliée aux différents symboles et aux actionneurs, à l'arrière de ceux-ci de façon à produire un rétro éclairage.

De préférence le couvercle sert de guide de lumière pour les actionneurs et les symboles fixes.

Selon un autre mode de réalisation préféré, le dispositif comprend en outre un bouton central de type à enfoncement et/ou rotatif pour régler la fonction sélectionnée par un des actionneurs, ce bouton pouvant prendre la forme d'un joystick articulé.

De manière avantageuse, le dispositif est adapté pour être connecté directement à un circuit intégré d'une planche de bord de véhicule automobile.

L'invention a également pour objet une planche de bord de véhicule automobile équipée d'un dispositif de commande tel que décrit précédemment.

D'autres caractéristiques, détails et avantages de l'invention ressortiront de la lecture de la description, faite en référence aux dessins annexés donnés à titre d'exemple et qui représentent respectivement :
- la figure 1, une vue en perspective d'un bouton conforme à l'invention,
- la figure 2, une vue en perspective éclatée du bouton de la figure 1,
- la figure 3, une vue en coupe du bouton conforme à l'invention, et
- la figure 4, une vue en coupe selon la ligne AA de la figure 3.

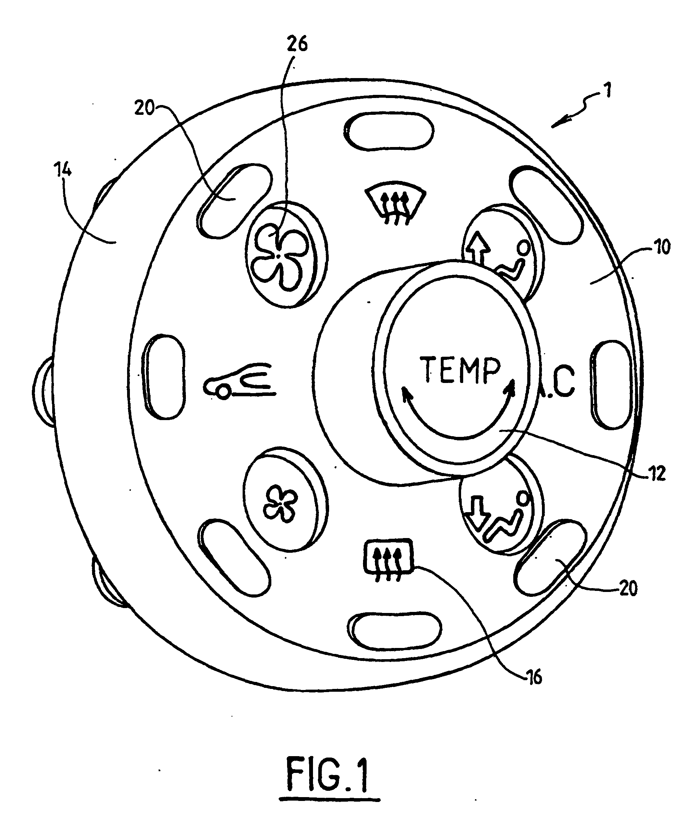

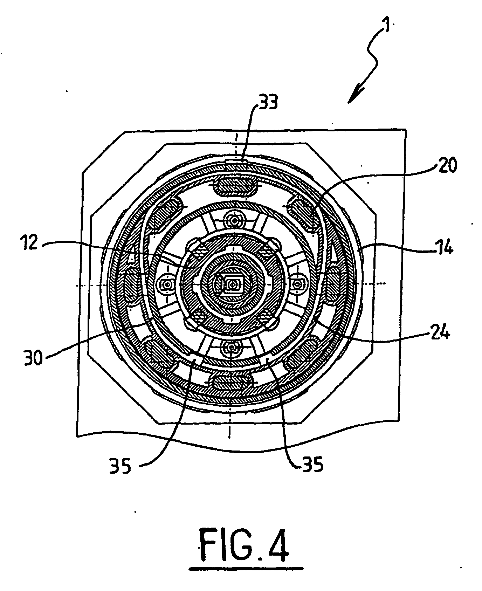

Un dispositif 1 de commande conforme à l'invention est représenté sur les figures 1 à 4. Ce dispositif 1, réalisé par exemple en polycarbonate, présente la forme d'un gros bouton sensiblement circulaire comprenant un couvercle 10, un bouton central 12 de type rotatif et à enfoncement et une molette périphérique rotative 14 déplaçable entre au moins deux positions de sélection le long d'une course de déplacement en rotation déterminée.

Quatre symboles fixes 16, ou pictogrammes, sont imprimés, par exemple par sérigraphie, sur la surface visible du couvercle 10 et sont rétro éclairés par une source lumineuse non représentée, telle que des diodes électro-luminescentes ou un faisceau optique. Ces pictogrammes fixes 16 représentent des fonctions liées à une climatisation de véhicule automobile, par exemple un pictogramme pour une fonction air recyclé, un pictogramme pour une fonction de mise en route ou non de la climatisation, un pictogramme pour une fonction d'augmentation de l'air chaud et un pictogramme pour une fonction d'augmentation de l'air frais.

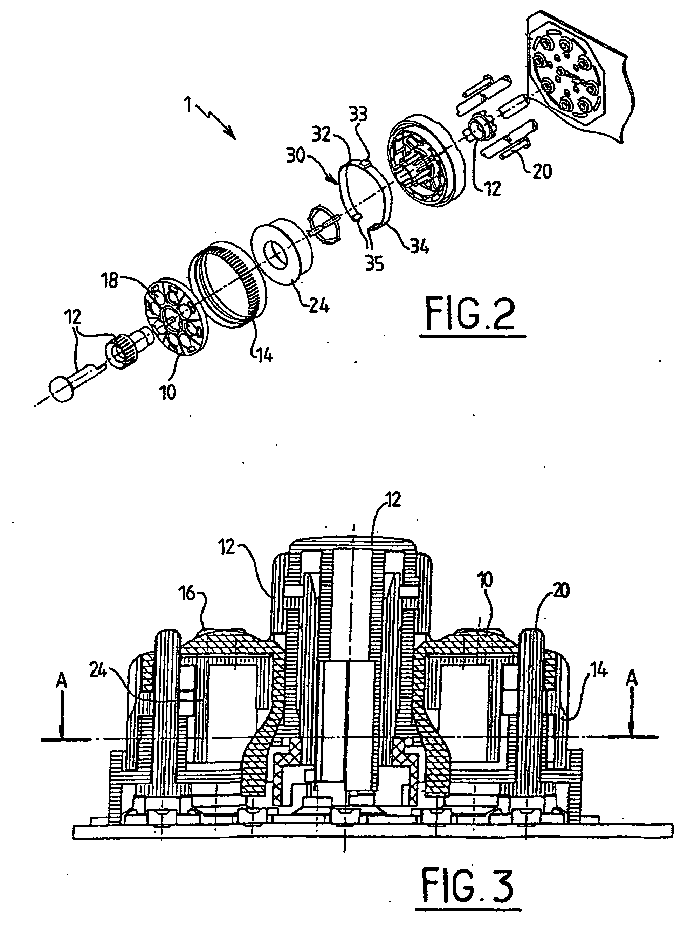

Le couvercle 10 est également muni d'ouvertures 18 le traversant dans son épaisseur et qui sont visibles sur la figure 2. La répartition des pictogrammes fixes 16 et des ouvertures 18 sur le pourtour du couvercle 10 est telle qu'un pictogramme 16 alterne avec une ouverture 18 et que les pictogrammes et les ouvertures sont séparées respectivement de 90° sur un même cercle centré sur le bouton central 12.

Le couvercle 10 supporte des boutons 20 à enfoncement disposés respectivement au regard des pictogrammes fixes 16 et des ouvertures 18. Ces boutons 20 sont répartis sur un cercle de diamètre supérieur au cercle sur lequel se situent les pictogrammes fixes 16 et les ouvertures 18. Ces boutons 20 sont également rétro éclairés et le couvercle 10 fait office de guide de lumière.

Un disque rotatif 24 est placé sous le couvercle 10. Des pictogrammes mobiles 26 sont imprimés, par exemple par sérigraphie, sur le disque 24. Ils sont au nombre de huit dans le cas présent, dont quatre sont visibles sur la figure 1, au niveau des ouvertures 18, les autres (quatre ou plus) étant masqués sous le couvercle 10. Ces pictogrammes mobiles 26 représentent d'autres fonctions associées ou non aux fonctions associées aux pictogrammes fixes 16. Dans le cas présent, les pictogrammes mobiles 26 sont liés à l'augmentation du débit d'air, à la diminution du débit d'air, à la position haute de l'aération et à la position basse de l'aération. Chaque bouton à enfoncement 20 permet ainsi, par simple pression, de sélectionner l'une des huit fonctions accessibles en même temps sur le dispositif de commande 1, que ce soit celles des pictogrammes fixes 16 ou mobiles 26. Pour faciliter la lisibilité de la fonction sélectionnée, le bouton 20 et/ou le pictogramme sélectionné 16 ou 26 est allumé tandis que les autres sont éteints.

Le bouton central 12 permet quant à lui de régler le paramètre associé à la fonction sélectionnée, par exemple augmenter la température du flux d'air, envoyer plus d'air en haut ou réduire la puissance du flux d'air.

Le dispositif de commande 1 de la présente invention a également pour particularité qu'il est reconfigurable, c'est-à-dire que les certaines fonctions ne sont pas figées. A cet effet, le disque rotatif 24 supportant les pictogrammes mobiles 26 est lié à la molette périphérique 14 de commande par l'intermédiaire d'une courroie d'entraînement 30 de section sensiblement circulaire avec une partie renflée élargie 32 et une partie ouverte 34 diamétralement opposée. La partie renflée 32 comporte un ergot 33 saillant en prise avec la molette périphérique 14, tandis que la partie ouverte 34 comporte deux ergots 35 saillant en prise avec le disque rotatif 24. Le disque rotatif 24 est disposé concentriquement à la molette périphérique 14, tout en étant disposé à l'intérieur de ladite molette 14, de sorte que le rapport entre la course de déplacement en rotation de la molette périphérique 14 et la course de déplacement en rotation du disque rotatif 24 est strictement inférieur à 1, et de préférence sensiblement égal à 0,5.

Ainsi, pour une course de déplacement en rotation de 45° de la molette périphérique 14 dans un sens ou dans l'autre, le disque rotatif 24 tourne de 90° dans le même sens grâce à la démultiplication créée par la courroie d'entraînement 30 et le rapport entre le diamètre du disque 24 et le diamètre de la molette 14.

En tournant la molette de 22,5°, l'utilisateur peut donc afficher les quatre pictogrammes qui sont masqués par le couvercle sur la figure 1, sensiblement sous les pictogrammes fixes, afin d'afficher de nouvelles fonctions qui pourront être sélectionnées par les boutons à enfoncement 20 puis réglées par le bouton central 12. Il pourra s'agir d'autres fonctions liées à la climatisation, ou bien de fonctions liées à l'utilisation d'un auto radio, d'un système de navigation ou bien d'un autre appareil.

Le dispositif ainsi présenté s'intègre facilement dans une planche de bord de véhicule automobile, en particulier la console centrale, et il est adapté pour être connecté directement à un circuit intégré pour le pilotage des différentes fonctions.

Les avantages de l'invention sont résumés ci-après :
- ergonomie améliorée qui consiste à avoir un seul bouton actionneur pour chaque fonction à sélectionner,
- selon chaque utilisation, les paramètres de base d'une fonction sont parfaitement identifiables et à accès direct. Par exemple, en mode de fonctionnement climatisation, il n'y a pas de pictogrammes liés à l'utilisation d'un auto radio, d'où aucun risque de perturber l'attention de l'utilisateur et aucune manipulation complexe du dispositif,
- la réduction du nombre d'actionneurs, avec cependant une grande possibilité de fonctions différentes, permet une augmentation de leur taille, d'où une manipulation plus facile et une meilleure lisibilité,
- le changement de l'affichage des pictogrammes reconfigurables est très simple car la molette présente un diamètre respectable et donc une prise en main agréable, sa rotation se faisant de plus sur une très faible course de déplacement, contrairement à l'art antérieur
- grâce à la technologie du polycarbonate rétro éclairé, il est possible d'obtenir des effets de couleur sur les boutons, permettant par exemple d'identifier certaines fonctions ou certains réglages selon la couleur, ce qui engendre notamment une meilleure sécurité d'utilisation et une utilisation possible de nuit,
- l'approche multi-fonctions de chaque actionneur permet d'éviter les touches inutilisées,
- le dispositif est compatible avec un écran éloigné de l'interface de commande.

Il doit être bien entendu toutefois que ces exemples sont donnés uniquement à titre d'illustration de l'objet de l'Invention, dont ils ne constituent en aucune manière une limitation.

Ainsi, le nombre de boutons à enfoncement 20 de type programmable ou fixe, de fonctions, ou encore de pictogrammes 16 et 26 peut varier en fonction de la place disponible sur le dispositif. Il peut en particulier n'y avoir que des pictogrammes mobiles et donc que des boutons 20 programmables.

La courroie d'entraînement 30 peut être remplacée par un joint élastique, un système à engrenage ou à bras de levier et crémaillère, ou tout autre organe de transmission adapté.

Le disque rotatif 24 peut être disposé de manière excentrée par rapport à la molette périphérique 14.

Le disque rotatif 24 peut également être placé périphériquement par rapport à la molette 14 si celle-ci, de plus petite dimension, est associée au bouton central de commande 12. Dans ce cas, le rapport entre la course en rotation de molette 14 et la course en rotation du support 24 des symboles mobiles peut être strictement supérieur à 1.

La course en déplacement de la molette périphérique 14 peut être plus étendue ou moins étendue que celle indiquée, selon l'ergonomie souhaitée et le nombre de fonctions différentes pouvant être sélectionnées à partir du disque rotatif 24.

Le bouton central 12 peut être un simple bouton rotatif ou un joystick articulé.

## Revendications

1. Dispositif de commande de fonction (1) comprenant au moins :
- un couvercle (10),
- un sélecteur rotatif (14) déplaçable entre au moins deux positions de sélection par rapport au couvercle (10), ledit sélecteur (14) présentant une course de déplacement en rotation,
- une pluralité d'actionneurs (20) disposés sur le couvercle (10) et manipulables par un utilisateur, certains au moins desdits actionneurs (20) pilotant des fonctions différentes pour au moins deux positions différentes du sélecteur (14),
- des symboles (26) mobiles en rotation par rapport au couvercle (10) et dont le déplacement est lié à celui du sélecteur (14) pour afficher la fonction d'au moins certains desdits actionneurs (20) pilotant les différentes fonctions,
**caractérisé en ce que** les symboles mobiles (26) sont entraînés indirectement par le sélecteur rotatif (14) de sorte que le rapport entre la course de déplacement en rotation du sélecteur rotatif (14), pour le passage d'une position à une autre, et la course de déplacement en rotation correspondante des symboles mobiles (26), est différent de 1.

2. Dispositif selon la revendication 1, dans lequel les symboles mobiles (26) sont montés sur un support (24) déplaçable en rotation entraîné par un organe de transmission (30) en prise avec le sélecteur rotatif (14) et ledit support (24).

3. Dispositif selon la revendication 2, dans lequel l'organe de transmission (30) est une courroie.

4. Dispositif selon la revendication 2 ou 3, dans lequel le rapport entre la course de déplacement en rotation du sélecteur rotatif (14) et la course de déplacement en rotation du support (24) est strictement inférieur à 1 et supérieur ou égale à 0,25, de préférence sensiblement égal à 0,5.

5. Dispositif selon la revendication 3, dans lequel la course de déplacement en rotation du sélecteur rotatif (14) est de ± 45° et la course de déplacement en rotation du support (24) est de ± 90°.

6. Dispositif selon l'une quelconque des revendications 2 à 4, dans lequel le sélecteur rotatif (14) est une molette et le support (24) des symboles mobiles est un disque

7. Dispositif selon la revendication 6, dans lequel la molette est une molette périphérique et le disque (24) est disposé concentriquement par rapport à ladite molette (14), à l'intérieur de celle-ci.

8. Dispositif selon l'une quelconque des revendications 3 à 7, dans lequel la courroie d'entraînement (30) présente une section sensiblement circulaire avec une partie (32) renflée et élargie d'un côté et une partie (34) ouverte diamétralement opposée à la partie renflée (32).

9. Dispositif selon la revendication 8, dans lequel la partie renflée (32) de la courroie d'entraînement (30) présente un ergot saillant (33) en prise avec le sélecteur rotatif (14) et la partie ouverte (34) de la courroie d'entraînement (30) présente deux ergots saillant (35) en prise avec le support (24) des symboles mobiles.

10. Dispositif selon l'une quelconque des revendications précédentes, **caractérisé en ce qu'**il comprend :
- quatre symboles fixes (16) disposés sur le couvercle (10),
- quatre symboles mobiles (26) disposés sous le couvercle (10) et visibles au travers de celui-ci par l'intermédiaire d'ouvertures (18) aménagées au travers dudit couvercle (10), et
- huit actionneurs (20) à enfoncement disposés sur le couvercle (10) et en regard d'un symbole fixe (16) ou mobile (26).

11. Dispositif selon la revendication 10, dans lequel une source lumineuse est reliée aux différents symboles (16 ; 26) et aux actionneurs (20), à l'arrière de ceux-ci de façon à produire un rétro éclairage.

12. Dispositif selon la revendication 11, dans lequel le couvercle (10) sert de guide de lumière pour les actionneurs (20) et les symboles fixes (16).

13. Dispositif selon l'une quelconque des revendications précédentes, **caractérisé en ce qu'**il comprend en outre un bouton central (12) de type à enfoncement et/ou rotatif pour régler la fonction sélectionnée par un des actionneurs (20).

14. Dispositif selon l'une quelconque des revendications précédentes, **caractérisé en ce qu'**il est adapté pour être connecté directement à un circuit intégré d'une planche de bord de véhicule automobile.

15. Dispositif selon l'une quelconque des revendications précédentes, dans lequel bouton central de commande (12) est un joystick articulé.

16. Planche de bord de véhicule automobile équipée d'un dispositif de commande (1) selon l'une quelconque des revendications précédentes.

## Patentansprüche

1. Funktionsteuervorrichtung (1) mit mindestens :
- einem Deckel (10),
- einem in Bezug auf den Deckel (10) zwischen mindestens zwei Wahlpositionen verstellbaren Drehwahlschalter (14), wobei der Wahlschalter (14) einen drehbaren Verstellweg aufweist,
- einer Mehrzahl von auf dem Deckel (10) angeordneten und von einem Benutzer bedienbaren Betätigungsorganen (20), wobei zumindest einige der Betätigungsorgane (20) verschiedene Funktionen in mindestens zwei verschiedenen Stellungen des Wahlschalters (14) ansteuern,
- in Bezug auf den Deckel drehbaren Symbolen (26), deren Verstellung mit derjenigen des Wahlschalters (14) verbunden ist, um die Funktion zumindest einiger der die verschiedenen Funktionen ansteuernden Betätigungsorgane (20) anzuzeigen,
**dadurch gekennzeichnet, dass** die mobilen Symbole (26) indirekt von dem Drehwahlschalter (14) angetrieben werden, so dass das Verhältnis zwischen dem drehbaren Verstellweg des Drehwahlschalters (14) zum Übergang von einer Position in eine andere und dem entsprechenden drehbaren Verstellweg der mobilen Symbole (26) nicht gleich 1 ist.

2. Vorrichtung nach Anspruch 1,
bei der die mobilen Symbole (26) auf einem drehbaren Träger (24) angeordnet sind, der von einem mit dem Drehwahlschalter (14) und dem Träger (24) zusammen wirkenden Übertragungsorgan (30) angetrieben wird.

3. Vorrichtung nach Anspruch 2,
bei der das Übertragungsorgan (30) ein Riemen ist.

4. Vorrichtung nach Anspruch 2 oder 3,
bei der das Verhältnis zwischen dem drehbaren Verstellweg des Drehwahlschalters (14) und dem drehbaren Verstellweg des Trägers (24) unbedingt keiner ist als 1 und größer oder gleich 0,25, vorzugsweise etwa gleich 0,5.

5. Vorrichtung nach Anspruch 3,
bei der der drehbare Verstellweg des Drehwahlschalters (14) ±45° und der drehbare Verstellweg des Trägers (24) ±90° beträgt.

6. Vorrichtung nach einem der Ansprüche 2 bis 4,
bei der der Drehwahlschalter (14) ein Rändelrad und der Träger (24) der mobilen Symbole eine Platte ist.

7. Vorrichtung nach Anspruch 6,
bei der das Rändelrad ein Umfangsrändelrad und die Platte (24) konzentrisch zum Rändelrad (14) innerhalb desselben angeordnet ist.

8. Vorrichtung nach einem der Ansprüche 3 bis 7,
bei der der Antriebsriemen (30) einen etwa kreisförmigen Abschnitt mit einen ausgebauchten und verbreiterten Teil (32) einerseits und einem offenen, dem ausgebauchten Teil (32) diametral gegenüber liegenden Teil (34) aufweist.

9. Vorrichtung nach Anspruch 8,
bei der der ausgebauchte Teil (32) des Antriebsriemens (30) einen mit dem Drehwahlschalter (14) zusammen wirkenden Vorsprung (14) und der offene Teil (34) des Antriebsriemens (30) zwei mit dem Träger (24) der mobilen Symbole zusammen wirkende Vorsprünge (35) aufweist.

10. Vorrichtung nach einem der vorangehenden Ansprüche,
**dadurch gekennzeichnet, dass** sie die folgenden Elemente umfasst::
- vier auf dem Deckel (10) angeordnete ortsfeste Symbole (16),
- vier unter dem Deckel (10) angeordnete mobile Symbole (26), die über in dem Deckel (10) vorgesehene Öffnungen (18) sichtbar sind, und
- acht Druckbetätigungsorgane (20), die auf dem Deckel (10) und gegenüber einem ortsfesten (16) oder mobilen Symbol (26) angeordnet sind.

11. Vorrichtung nach Anspruch 10,
bei der eine Lichtquelle mit den verschiedenen Symbolen (16; 26) und den Betätigungsorganen (20) verbunden und hinter diesen angeordnet ist, um sie von hinten zu beleuchten.

12. Vorrichtung nach Anspruch 11,
bei der der Deckel (10) als Lichtleiter für die Betätigungsorgane (20) und die ortsfesten Symbole (16) dient.

13. Vorrichtung nach einem der vorangehenden Ansprüche,
**dadurch gekennzeichnet, dass** sie ferner einen zentralen Druck- und/oder Drehknopf (12) umfasst, um die von einem der Betätigungsorgane (20) gewählte Funktion einzustellen.

14. Vorrichtung nach einem der vorangehenden Ansprüche,
**dadurch gekennzeichnet, dass** sie unmittelbar an eine integrierte Schaltung eines Armaturenbretts eines Kraftfahrzeug angeschlossen werden kann.

15. Vorrichtung nach einem der vorangehenden Ansprüche,
bei der der zentrale Steuerknopf (12) ein gelenkiger Joystick ist.

16. Armaturenbrett eines Kraftfahrzeugs, ausgestattet mit einer Steuervorrichtung (1) nach einem der vorangehenden Ansprüche.

## Claims

1. A function-control device (1), which includes at least:
- a cover (10),
- a rotary selector (14) which can be switched between at least two selection positions in relation to the cover (10), where the said selector (14) executes a rotary motion,
- a plurality of actuators (20) distributed around the cover (10) and capable of being operated by a user, where at least some of the said actuators (20) control different functions for at least two different positions of the selector (14),
- mobile symbols (26) in rotation in relation to the cover (10), and the displacement of which is linked to that of the selector (14) in order to display the function of at least some of the said actuators (20) controlling the different functions,
**characterised in that** the mobile symbols (26) are driven indirectly by the rotary selector (14) so that the relationship between the rotary motion of the rotary selector (14), when moving from one position to another, and the corresponding rotary motion of the mobile symbols (26), is not 1.

2. A device according to claim 1, in which the mobile symbols (26) are mounted on a support (24) which can be rotated, and which is driven by a transmission device (30) which is meshed with the rotary selector (14) and the said support (24).

3. A device according to claim 2, in which the transmission device (30) is a belt.

4. A device according to claims 2 or 3, in which the relationship between the rotary motion of the rotary selector (14) and the rotary motion of the support (24) is strictly less than 1 and equal to or greater than 0.25, though preferably equal to about 0.5.

5. A device according to claim 3, in which the rotary motion of the rotary selector (14) is 45°, and the rotary motion of the support (24) is ± 90°.

6. A device according to any of claims 2 to 4, in which the rotary selector (14) is a control knob, and the support (24) for the mobile symbols is a disk.

7. A device according to claim 6, in which the control knob is a peripheral control knob and the disk (24) is placed concentrically in relation to the said control knob (14) and inside it.

8. A device according to any of claims 3 to 7, in which the drive belt (30) is of more or less circular section with one part (32) expanded and broadened on one side and one part (34) open diametrically opposite the expanded part (32).

9. A device according to claim 8, in which the expanded part (32) of the drive belt (30) has a projecting lug (33) which is meshed with the rotary selector (14), in which and the open part (34) of the drive belt (30) has two projecting lugs (35) which are meshed with the support (24) for the mobile symbols.

10. A device according to any of the preceding claims, **characterised in that** it includes:
- four fixed symbols (18) distributed around the cover (10),
- four mobile symbols (26) placed under the cover (10) and visible through the latter by means of openings (18) created in the said cover (10), and
- eight push-in actuators (20) distributed around the cover (10) and opposite a fixed (16) or mobile (26) symbol.

11. A device according to claim 10, in which a light source is linked to the various symbols (16; 26) and to the actuators (20), and to the rear of the latter so as to create a backlighting effect.

12. A device according to claim 11, in which the cover (10) acts as a light guide for the actuators (20) and the fixed symbols (16).

13. A device according to any of the preceding claims, **characterised in that** it also includes a central button (12) of the push-in and/or the rotating type, to adjust the function selected by one of the actuators (20).

14. A device according to any of the preceding claims, **characterised in that** it is adapted to be connected directly to an integrated circuit on a vehicle dashboard.

15. A device according to any of the preceding claims, in which the central control button (12) is an articulated joystick.

16. A vehicle dashboard fitted with a control device (1) according to any of the preceding claims.
